# EUROPEAN PATENT APPLICATION

(11) **EP 1 286 276 A1**
(43) Date of publication of application: **26.02.2003**
(21) Application number: 01119467.7
(22) Date of filing: 13.08.2001
(51) Int. Cl.: G06F 17/30

(54) **Database query interface**

(71) Applicant: Sun Microsystems, Inc., Santa Clara, California 95054 (US)
(72) Inventor: Janssen, Ocke, 20097 Hamburg (DE)
(74) Representative: Betten & Resch

(57) **Abstract**

A method for implementing on a computer a user interface for allowing a user to formulate a complex database query which comprises a plurality of individual query statement portions respectively linked by a linking statement, said method comprising: displaying a first graphical user interface for inputting by a user query design information corresponding to a first query statement portion; displaying a second graphical user interface which displays a representation of said first query statement portion; in response to a user request for inputting a further query statement portion, receiving a user input defining said linking statement which links said first and said further query statement portions; displaying said first graphical user interface for receiving by a user query design information corresponding to said further query statement portion; displaying in said second graphical user interface a hierarchical tree view of said query portions inputted into said first graphical user interface.

## Description

### FIELD OF THE INVENTION

The present invention relates to a method and an apparatus for implementing on a computer a database query user interface, and in particular, a database query user interface which allows a user to formulate complex database queries.

### BACKGROUND OF THE INVENTION

Databases are widely distributed for organizing, managing, and querying data in an ordered form. So-called relational databases are based on table structures in which the data is organized in columns and rows. One row typically is called a data set or a data record, and the columns typically contain different attributes for the individual data sets.

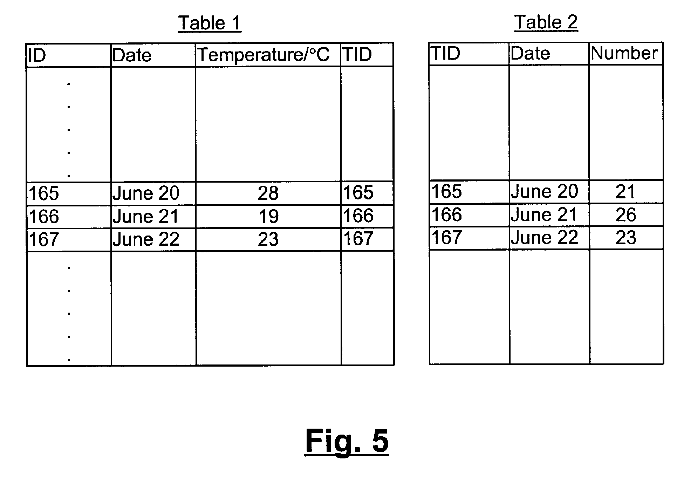

In order to explain some basic principles of databases reference is made to Fig. 5. Fig. 5 shows two database tables. Both tables as a first column have an identifier ID which is a number uniquely identifying a corresponding row.

Table 1 as further columns has the "date", the temperature in degrees centigrade, and a last column labelled "TID" which is a identifier referencing the corresponding rows of Table 2.

When looking at Table 2, one sees that the first column of Table 2 also is labelled "TID", which means that by the identifier "TID" there is established a relation between the data sets or rows of Table 1 and Table 2. Table 2 as a further column also has the date, and then it further has a column labelled "number". Let us for example assume that this column contains the number of pupils which at a certain date have attended their class at school.

Fig. 5 gives a very simple example of a so-called relational database, where two database tables are linked by a relation which is here established by the identifier TID. We here have a so-called 1 to 1-relation, which means that for each data set in Table 2 there is a corresponding data set or row in Table 1.

The collection of a set of individual data sets which is linked together, here for example the rows where the date is June 20 in Table 1 and Table 2, are called an "entity" in terms of relational algebra which gives the mathematical foundation for database theory.

Such entities contain all the information which logically belongs together, and if one considers a particular piece of information, such as the number 19 in row 166 of Table 1, then its corresponding entity being formed by the numbers 166, by the date June 21, by TID 166, and by "number" 26, contains all the information which somehow is related to this piece of information. It is therefore very important to carefully design the individual database tables in order not to miss at a later stage any piece of information which should be included in the overall database model.

Once a database model or database schema has been created, the database table contents can be "queried", which means that a user can input certain search statements (queries), and the so-called database management system handles those queries, forwards them to the individual database tables and extracts those data sets (data records) which meet the search criteria.

The capability to query the database tables is probably the most important functionality of databases at all, since even more than being interested in storing some information a user is interested in finding it again when he looks for it.

While there are a wast number of different database query interfaces which differ from each other more or less, there are two general approaches which are common to most database query interfaces and which resemble each other no matter which database software commercially available one considers.

The first one is a so-called "structured query language", usually abbreviated SQL. SQL is a query language which based on a relatively simple statement structure is "complete" in terms of relational algebra, and moreover, it is relatively easy to learn and one can quickly understand it because it somehow resembles the way a human being would express what SQL also expresses.

The most basic statement of SQL is the "select" statement, which as parameters has the name of a table and the name of individual columns of that table. For example, SELECT* from 'Table 1' selects all the columns contained in Table 1. SELECT 'date' from 'Table 1' selects only the column labelled "date" from the table labelled "Table 1".

Conditional statements also are possible, they usually are initiated with the "WHERE" statement followed by a conditional criterion, such as A > B, or the like.

Another basic statement of the SQL language is the UNION statement, which connects to SELECT statements to each other in such a manner that the sets respectively resulting from the individual SELECT statements are combined, which means that the result set is the combination of the two individual sets resulting from the individual SELECT statements connected by the UNION statement.

Another basic approach for querying databases is the so-called "query by example" (QBE) approach. With this method, as its name already tells, a user just inputs what he actually wants to retrieve. A user is prompted with a table which actually resembles the database tables, and therein he can input values which he wishes the fields to assume for the result set he desires to retrieve, and based on the thus inputted example values the database tables are queried and a corresponding result set is retrieved.

In general the QBE query method is much easier to use and to learn than the somehow cryptic albeit simple SQL language. QBE becomes very difficult to handle if the database query which is to be formulated becomes very complex. This is also because most database software offers a standard form sheet for inputting QBE search, and therefore they are limited in their capabilities, although in theory a QBE search can do anything which can be done by SQL.

For this reason, most users when formulating complex database queries which contain a plurality of instructions which even might be nested prefer to use SQL rather than QBE, with the consequence that they have to deal with very long and complex query strings which are difficult to understand and which are error prone.

Based on the foregoing, embodiments of the present invention provide an improved method for formulating complex database queries.

### SUMMARY OF THE INVENTION

According to one embodiment there is provided a method for realizing a user interface which allows a user to formulate a complex database query which comprises a plurality of individual query statement portions. The portions are respectively linked by a linking statement. There is displayed a first graphical user interface for inputting information by a user which corresponds to a first query statement portion. In a second graphical user interface a representation of the query statement portion inputted into the first graphical user interface is displayed. On request by the user there is defined a linking statement which links the first query statement portion to a further query statement portion. Then by means of said first graphical user interface a user may input further query design information which correspond to a further query statement portion which is linked to the first query statement portion by said linking statement. In the second graphical user interface then there is displayed a hierarchical tree view of the query statement portions inputted into said first graphical user interface.

According to a further embodiment, the display of said tree view also comprises said linking statement. This gives a user then the full information about the query statement designed so far.

In yet a further embodiment a user can select a query portion from the query portions displayed in the second graphical user interface, and in response to the said selection the first graphical user interface is then brought into conformity with the query portion thus selected. This means that the first graphical user interface then displays the query design information which corresponds to the selected query portion, and a user may then amend, correct, or even execute said query statement portion displayed in said first graphical user interface. This is particularly useful for checking the correctness of complex database queries by checking its individual components corresponding to the individual query statement portion.

According to a further embodiment the first user interface is a query by example (QBE) window. This is a particularly easy to use graphical interface which assists the user in designing the individual query statement portions.

According to a further embodiment the representation of the query statement portions in the second graphical user interface is in the form of a SQL statement.

In yet a further embodiment, in said tree view the individual query statement portions are displayed as nodes, where as when starting from a first query statement portion as parent node, the other query statement portions are either displayed as sibling nodes or as child nodes. Depending on the linking statement which connects to the individual query statement portions, the one generated as the latter one is either displayed as a child node or as a sibling node. If the linking statement is a UNION statement then the latter statement is displayed as a sibling node at the same hierarchical level as the first query statement. However, if the linking statement is a conditional statement, such as WHERE statement, then the latter statement is displayed as a child node at a hierarchy level lower than the query statement portion which has previously been generated.

According to a further embodiment in said tree view in said second graphical user interface there is displayed a root node which corresponds to the complex database query as a whole. If the root node is selected by a user, then this means that the complex database query is selected as a whole and can be executed as a whole rather than executing only individual query statement portions which together form the complex database query.

According to a further embodiment, in said tree view there is displayed an indication for each node as to whether this node has any child nodes. If so, then in response to a corresponding user request the child node can be incorporated into its parent node to thereby reduce the number of branches displayed in the tree view and to thereby reduce the overall complexity. In response to a corresponding user request the thus "compressed" representation again can be "expanded" such that the child node again is displayed as a separate node in the tree view.

### BRIEF DESCRIPTION OF THE DRAWINGS

Fig. 1 shows a flowchart which illustrates a method according to an embodiment of the present invention.
Fig. 2 shows a flowchart completing the flowchart of Fig. 1 and illustrating a further embodiment of the present invention.
Fig. 3 shows a flowchart illustrating a yet further embodiment of the present invention.
Fig. 4A shows a tree view in accordance with an embodiment of the present invention.
Fig. 4B shows a further tree view in accordance with an embodiment of the present invention.
Fig. 4C shows yet a further tree view in accordance with an embodiment of the present invention.
Fig. 4D shows an even further tree view in accordance with an embodiment of the present invention.
Fig. 5 exemplarily shows two database tables.
Fig. 6A to 6E illustrate the operation of an embodiment in accordance with the present invention.
Fig. 7A schematically illustrates a computer system which can be used in connection with an embodiment of the present invention.
Fig. 7B illustrates a computer system which can be used in connection with the present invention.

### DETAILED DESCRIPTION

Embodiments of the present invention will now be explained in detail with reference to the accompanying drawings.

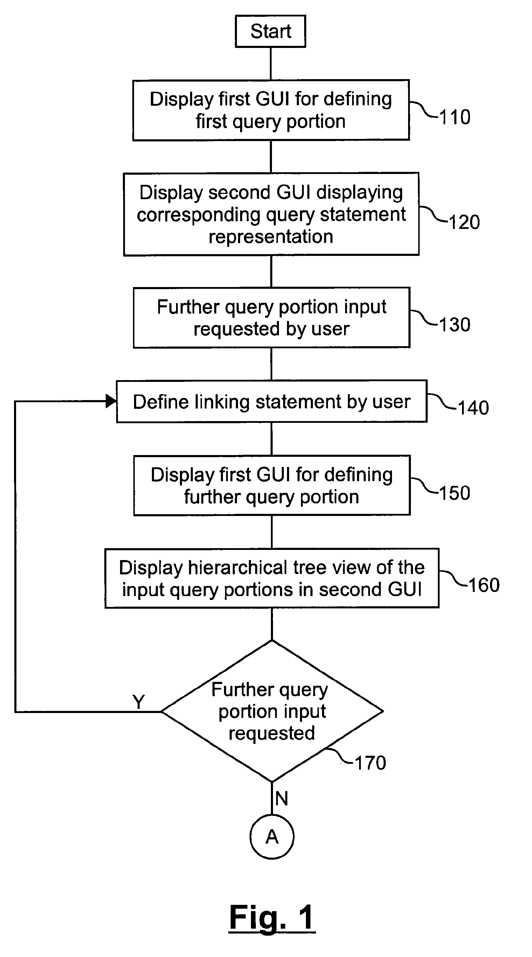

Fig. 1 shows a flowchart which illustrates an embodiment of the present invention. In operation 110 there is displayed a first graphical user interface for inputting by a user a first query statement portion. This first graphical user interface may for example be a window, such as a window which allows a user to define a query statement portion in form of query by example (QBE). The first graphical user interface of operation 110 may be any graphical user interface suitable for defining by a user input a query portion, this has not necessarily to be in the form of query by example. It could as well be imagined that the first graphical user interface is a simple window for inputting a SQL statement, although a query by example window might be regarded as easier to handle by some users. Query by example windows or user interfaces are well-known in the art, virtually all database softwares offers the user a corresponding user interface. An example of how such a user interface appears will be explained in more detail at a latter stage in connection with a further embodiment of the present invention.

In operation 120 then there is displayed a second graphical user interface which displays a query statement representation which corresponds to the query portion inputted in operation 110. The second graphical user interface could for example be a second window, and the query statement representation could be any representation somehow reflecting or corresponding to the query portion inputted in operation 110.

According to a particular embodiment the query statement representation displayed in the second graphical user interface takes the form of a SQL representation of the query portion inputted in operation 110. For that purpose if in operation 110 the query portion has been inputted into a query by example window the corresponding query design information must be converted into the corresponding SQL statement. Such a conversion is well-known in the art, virtually every database software commercially available comprises a feature which allows for the display of an SQL statement which corresponds to a QBE query which has been inputted into QBE query window. However, other representations could be imagined as well, for example there could just be displayed an icon in the second graphical user interface, said icon representing the query portion inputted in operation 110. Possibly, the icon could then be labelled by a number corresponding to the numbering of the query portion. In case of the query portion being the first query portion which has been inputted the number would be "1", in case of it being n-th query portion, the numbering would be "n".

In operation 130 a user may then request to input a further query statement portion. Then in operation 140 the linking statement which links the query portion to be newly inputted with the query portion which has previously been inputted needs to be defined. For that purpose, in one embodiment of the invention there pops up a window which allows the user to define the query linking statement manually. In another embodiment of the invention the user is offered several options for the linking statement. The user can select one of a plurality of linking statements through a pull-down menu as it is well-known in the art. Among the linking statements offered there could be SQL statements such as UNION, WHERE, IN, etc. If needed, the user may then be allowed to amend the linking statement selected from the options manually by inputting the amendment through the keyboard, as it is well-known in the art.

In operation 150 then there is again displayed the first graphical user interface for defining the further query portion by the user. This is carried out in the same manner as already the first query statement portion has been defined in operation 110.

In operation 160 then there is displayed in the second graphical user interface a hierarchical tree view of the query statement portions inputted so far.

In operation 170 it is then checked whether the user has requested to input a further query statement portion or not. If the input of a further query portion has been requested, then the flow returns to operation 140 and proceeds as already described before. If no further query portion input has been requested by the user, then the query design has been completed, and the query design procedure may end after operation 170.

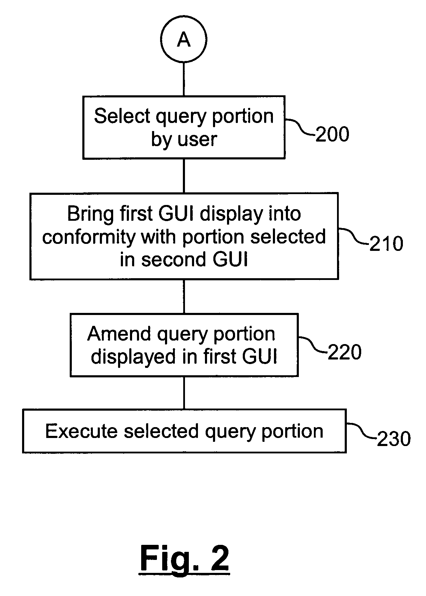

However, according to a further embodiment after operation 170 rather than having completed the query design, the user may be provided with some further options or functions related to the testing or checking of the query designed so far. This is now described in connection with Fig. 2.

Let us assume that several query statement portions have been inputted and that the second graphical user interface now may comprise a relatively complex tree view of representations which correspond the individual query portions. A user may then wish to check the individual query statement portions by executing only those individual portions he wishes to check, rather than executing the complete and complex database query as a whole which is formed by the individual query statement portions.

For that purpose, an operation as now will be described in connection with Fig. 2 and as it is in accordance with a further embodiment of the present invention may take place.

In operation 200, which may directly follow a operation 170 from Fig. 1, a user may select a query portion among the query portions displayed in the second graphical user interface. In operation 210 the first graphical user interface, or better to say the information displayed therein is brought into conformity with the query statement portion selected in the second graphical user interface. This means that the first graphical user interface then displays the query design information corresponding to the selected query statement portion.

In operation 220 a user may then amend the query portion displayed in the first graphical user interface, and in operation 230 the amended query portion displayed in the first graphical user interface is executed. It should be noted here that according to this embodiment only the selected query portion is executed in operation 230, rather than the overall complex query formed by the individual query statement portions all together. This means that based on the result outputted in response to the execution of only the selected query portion, a user can easily check whether the selected query portion has been formulated correctly. Rather than checking the very complex overall query statement formed by the combination of the individual query statement portion as a whole, when checking whether the query has been formulated correctly, a user may one after another and individually one by one check the individual query statement portions. This is very helpful when the overall query is very complex so that an error check for the overall query is very difficult.

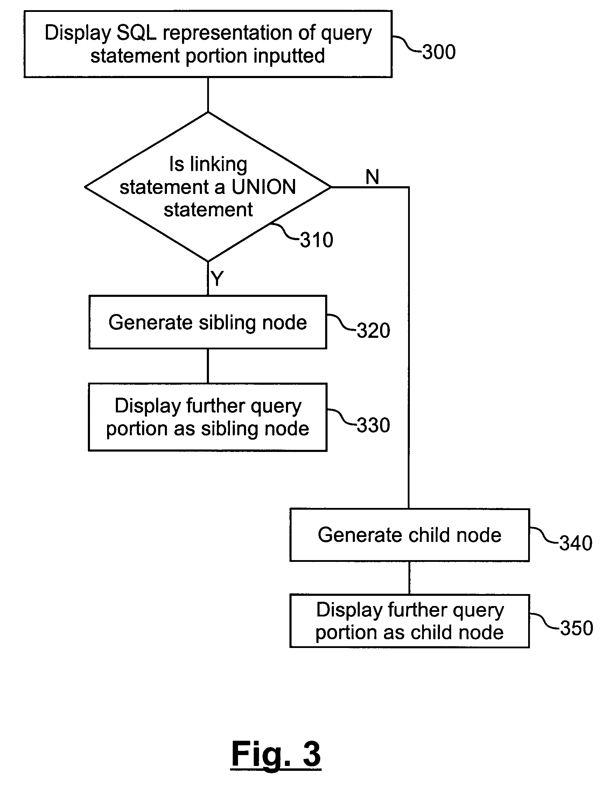

A yet further embodiment of the present invention will now be explained in connection with Fig. 3.

According to this embodiment, the query statement portion representation displayed in the second graphical user interface takes the form of a SQL representation of the query information inputted into the first graphical user interface.

In operation 310 it is checked whether the linking statement which links to query statement portions is a UNION statement. If so, then there is generated a new node in the tree view which is in the form of a sibling node. This means that in terms of its hierarchy level it corresponds to the query statement portion which has previously been generated. In operation 330 then there is displayed the further query portion as the sibling node.

It should be noted here that operations 320 and 330, or the generation of the tree view in general, can be carried out by using standard patterns for the tree view which consists of individual elements, combined together to form said tree. Such patterns and their use are well-known in the art, for example in order to realize file managers in operation systems. Therein also parent folders and child folders are generated in displayed according to a certain pattern, and the individual elements are then labelled according to the users definitions (the naming of the files and the directories). In similar manner, sibling nodes and child nodes can be generated in the present embodiment using a standard pattern for a tree view, where the individual elements (or nodes) are then labelled with the individual query statement portions in the form of SQL statements.

As mentioned already, not only sibling nodes may be generated, but also child nodes. If in operation 310 it is judged that the linking statement is not a UNION statement, then there is generated a child node in operation 340 and in operation 350 the further query portion is then displayed as child node. This can, as already mentioned, be done by using a standard pattern for displaying a tree view, where the individual nodes are either labelled or directly replaced by the SQL statement corresponding to the individual query portions.

A further example of an embodiment of the present invention will now be explained in the following.

Fig. 5 shows two database tables, Table 1 displaying date and temperature, and Table 2 which is linked to Table 1 by identifier TID shows the date and the number of pupils which at a certain date have attended the class at school.

Let us now assume that those are the database tables which are subject to the query, and let us further assume that a user wishes to formulate a complex database query which consists of three individual query statement portions.

The first query statement portion the user wishes to dispatch to database management system should return all elements contained in the column "date" of Table 1 and all elements contained in the column "temperature" of Table 1.

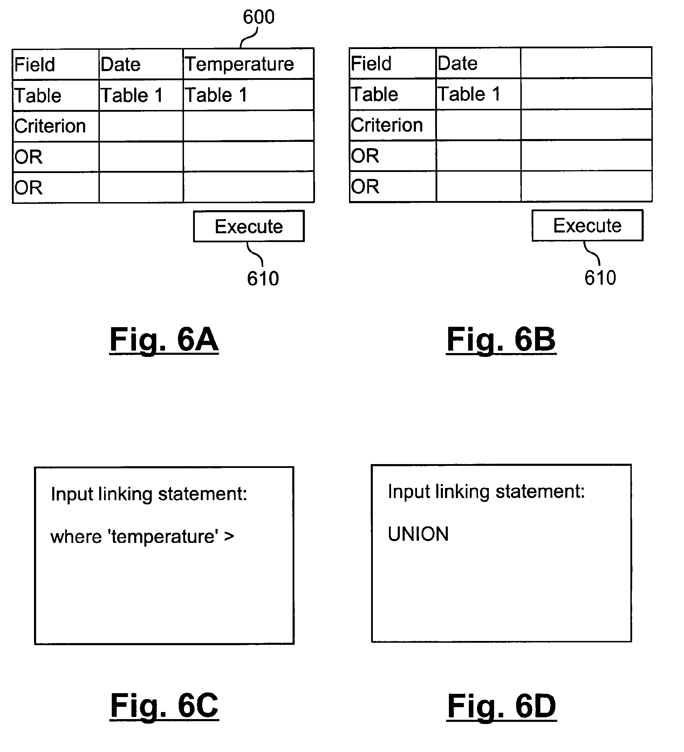

To formulate this query the user must input a corresponding information into the query design window responding to the first graphical user interface. In this embodiment, the query design window corresponding to the first graphical user interface is a query by example (QBE) window as illustrated in Fig. 6A.

The leftmost column of Fig. 6A indicates which information has to be inputted into the cells in the further columns in order to formulate a certain query. For example, by inserting a certain "field" information a corresponding column data is selected from a table which is indicated in the "table" field. In the example of Fig. 6A this means that the column "date" is selected as a whole from table "Table 1".

In the row labelled "criterion" the user could input some limiting criteria, such as which values the individual fields indicated in the "field" row should assume. In the rows labelled "OR" those criteria could be ORed with other criteria.

The information inputted in the third column of Fig. 6A means that the column "temperature" also is fully selected from Table 1 without any limiting criterion.

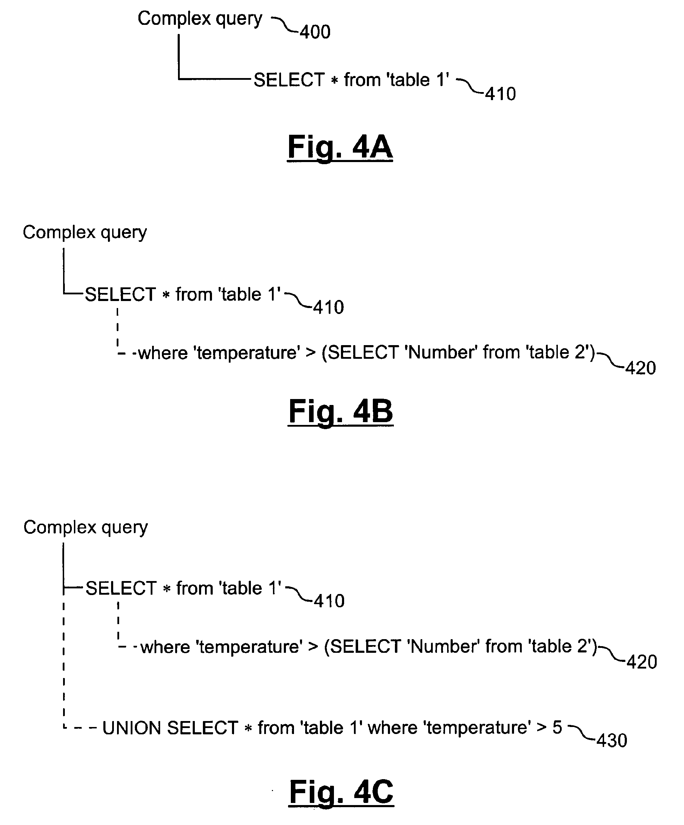

Let us now turn to Fig. 4A which illustrates the display of the second graphical user interface corresponding to the query design inputted so far. Fig. 4A shows a root node 400 here labelled "complex query" which is the starting point and which corresponds to the complex query as a whole. Starting from this root node, which is the only node displayed as long as no query statement portion has been inputted yet, after the input shown in Fig. 6A has been made there is displayed a first node 410 displaying SQL statement to the QBE query illustrated in Fig. 6A. The statement shown in node 410 is just another representation of the query information displayed in Fig. 6A, the latter being a QBE query and the former being in the form of an SQL statement. However, when dispatched to a database management system, both queries deliver the same result.

A user may then request to input a further query portion which is to be linked to the previously inputted query statement portion. This request can e.g. be inputted by pushing a corresponding button displayed on a display (here not shown), it could be implemented by responding correspondingly to a certain key combination pressed on the keyboard, it could be initiated by a corresponding item in the context menu when pressing the right mouse button, or the like.

After a corresponding request has been inputted, a user is prompted for defining the linking statement which is to link the two query statement portions as schematically illustrated in Fig. 6B. The linking statement which has been inputted by the user in the example of Fig. 6B takes the form "where'temperature'".

After a user has defined the linking statement, the completion of which can e.g. be indicated by double clicking the mouse button,by pressing a certain key combination, or the like, the process again returns to the display of the first graphical user interface as illustrated in Fig. 6C. This first graphical user interface then is empty and waits for a user input corresponding to the second query statement portion. In Fig. 6C the query statement inputted means that the user wishes to retrieve the column labelled "number" from Table 2. However, this statement portion is linked to the previous statement portion by the corresponding linking statement "where'temperature'>". This means that as far as the overall or complex query statement is concerned, only those data sets are retrieved where the temperature has a value greater than the corresponding value contained in the column "number". In other words, only those data sets are retrieved where the temperature in degrees centigrade is greater than the number of pupils who attended the class at that date.

This will become more clear when looking at Fig. 4B which shows the second graphical user interface display (the tree view) after the second query portion has been inputted into the interface illustrated in Fig. 6C. The complex query statement as displayed in the second graphical user interface illustrated in Fig. 4B now causes the database software to retrieve those data sets from Table 1 for which the temperature in degrees centigrade is larger than the number of pupils who attended at that date their class.

It should be mentioned here, that the button 610 shown in Fig. 6A and 6C and labelled "execute" when pressed by a user causes the database management software to execute the query statement portion shown in the respective Fig. 6A, and 6C. By pressing this button a user may check whether he has inputted his query design information correctly. Moreover, when looking at Fig. 4B, it can be seen that the second graphical user interface display as illustrated in Fig. 4B contains two nested SELECT statements, one contained in a parent node 410 and one contained in child node 420. A user may select from this display either node 410 or node 420, and based on this selection, in the first graphical user interface there will either be displayed a display as shown in Fig. 6A or Fig. 6C, respectively. This means that a user can select by a corresponding input from the second graphical user interface a certain query statement portion and the first graphical user interface then is brought into conformity with this selection and the corresponding query statement portion can be executed and tested by pressing e.g. button 610.

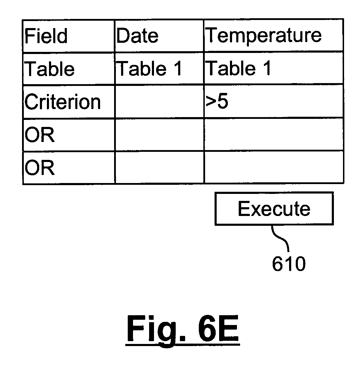

A user may then request the input of even a further query statement portion as already explained before. Again, the user is prompted for inputting the linking statement as illustrated in Fig. 6D. Thereafter, as shown in Fig. 6E again QBE window allows the user to input the next query statement portion. In this case, the linking statement defined by the user has been a UNION statement. The next query statement portion as shown in Fig. 6E selects all columns from Table 1, however, only those records where the temperature value is greater than 5 degrees centigrade.

After this query design input has been made and possibly tested by pushing button 610, the display of the second graphical user interface changes as illustrated in Fig. 4C. In addition to nodes 410 and 420 already present in Fig. 4B, there is now a further node 430 which is a sibling node to node 410. This is because the linking statement defined by the user takes the form of UNION statement.

According to this embodiment, in case of the linking statement being UNION statement the node generated for this statement in the second graphical user interface is a sibling node, where for any other statements there are generated child nodes.

Again, as already explained before, a user may select a query statement portion from the display illustrated in Fig. 4C, and accordingly the display of the first graphical user interface (the query design window) will change and the thus selected query statement portion may be executed and tested.

If in the second graphical user interface as illustrated in Fig. 4C a user selects the root node (here labelled "complex query"), then this means that the combined complex query formed by the combination of the individual query statement portions is selected. While this complex query usually can not be displayed in the query design window of the first graphical user interface, nevertheless it can be selected for execution. Selection of "complex query" therefore means that by inputting a corresponding request (e.g. by pressing an "execute" button not shown here) a user may request the database software to carry out the complex query.

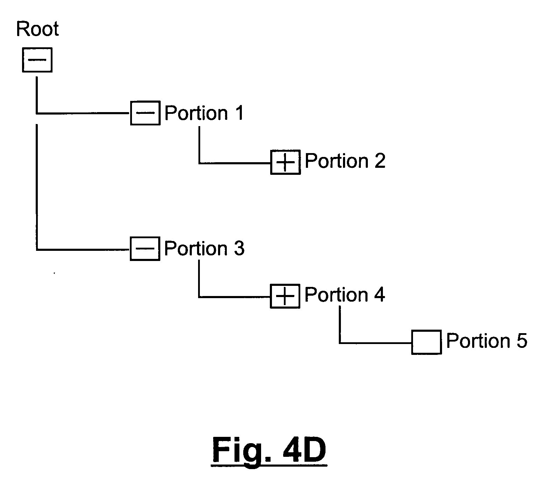

According to a further embodiment of the present invention the display in the second graphical user interface further may contain an indication for the individual nodes and displayed in connection with them as to whether they contain any child nodes or not. This can e.g. be implemented in analogy to the well-known file managers, such as the "explorer", and as it is for example schematically illustrated in Fig. 4D. For those query portions which contain an additional child portion there is for example displayed before the query statement portion itself a little box which contains either a plus or a minus sign. A minus sign then means that there is a further child query portion which actually is already displayed as a child node, as illustrated in case of portion 1 of Fig. 4D, the already displayed child node being the node labelled "portion 2". If the box containing a minus sign would be pressed by the mouse button, then the tree display would be compressed such that the individual node labelled "portion 2" would disappear and would be incorporated into a node now labelled "portion 1". On the other hand, for those nodes which are indicated with a plus sign, this means that they have an additional child node which is just not displayed at the moment, as in the case of the node labelled portion 2 in Fig. 4D. By pressing the plus sign, the display would then be expanded and a further node being a child node for node portion 2 would be displayed with the corresponding query statement portion. For those nodes, which do not have any child nodes, the box could be empty or there would just be displayed no box.

The implementation of such a kind of display indication is straight forward for persons skilled in the art being familiar with the generation of implementing e.g. graphical file managers, such as the well-known "explorer".

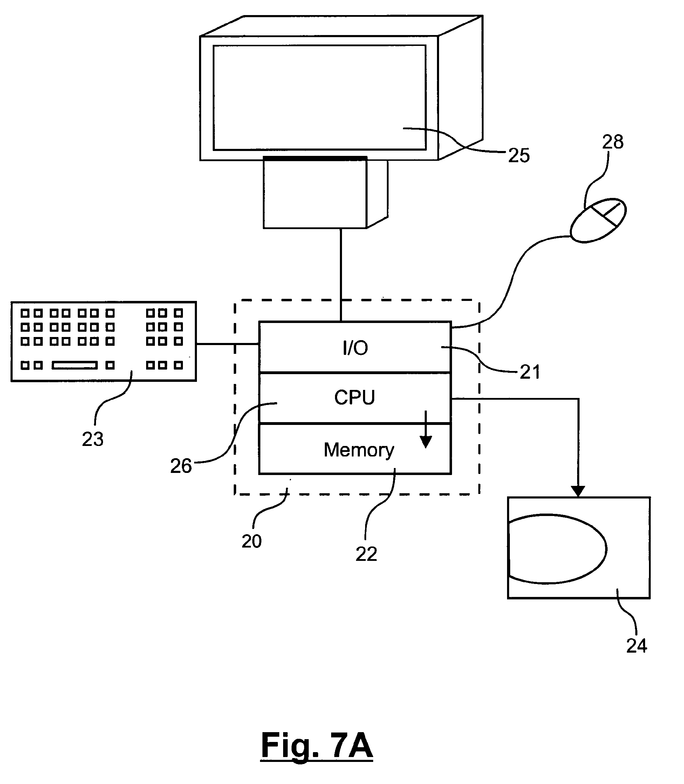

The present invention is applicable to a hardware configuration like a personal computer or a work station as illustrated schematically in Fig. 7A. The computer may comprise central processing unit CPU 26, an input/output unit 21, an internal memory 22, and an external memory 24. The bitmaps are preferably stored in the internal memory 22. The computer may further comprise standard input devices like a keyboard 23, a mouse 28, or speech processing means (not illustrated). The input/output unit 21 forms an interface to an output device 30 like a laser printer, an ink jet printer or any other suitable output device.

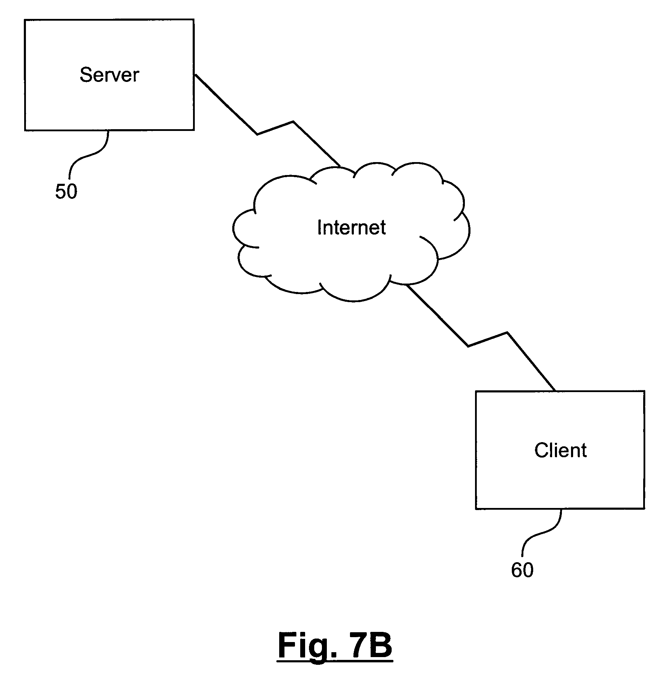

The invention, however, may also be applied to a client/server configuration as schematically illustrated in Fig. 7B. The qery dsign interface may be displayed on a screen of a client device 60 like a desktop computer, a laptop computer or a web-enabled mobile telephone. The client device 60 is coupled with an output device 30 as in the configuration shown in Fig. 7A. The operations explained in connection with Figs. 1 to 6 to generate the query to be dispatched to a database, however, may be partly or in total carried out on a server computer 50 accessible by the client device 60 over a data network as the Internet using a suitable browser application.

According to a further embodiment, there may be provided a method for implementing on a computer a user interface for allowing a user to formulate a complex database query which comprises a plurality of individual query statement portions respectively linked by a linking statement, said method comprising the following steps: displaying a first graphical user interface for inputting by a user query design information corresponding to a first query statement portion; displaying a second graphical user interface which displays a representation of said first query statement portion; in response to a user request for inputting a further query statement portion, receiving a user input defining said linking statement which links said first and said further query statement portions; displaying said first graphical user interface for receiving by a user query design information corresponding to said further query statement portion; displaying in said second graphical user interface a hierarchical tree view of said query portions inputted into said first graphical user interface.

According to a further embodiment there may be provided a computer system comprising: means for displaying a first graphical user interface for inputting by a user query design information corresponding to a first query statement portion; means for displaying a second graphical user interface which displays a representation of said first query statement portion; in response to a user request for inputting a further query statement portion, means for receiving a user input defining said linking statement which links said first and said further query statement portions; means for displaying said first graphical user interface for receiving by a user query design information corresponding to said further query statement portion; means for displaying in said second graphical user interface a hierarchical tree view of said query portions inputted into said first graphical user interface.

While the invention has been particularly shown with reference to a preferred embodiment thereof, it will be understood by those skilled in the art that various other changes in the form and details may be made therein without departing from the spirit and scope of the invention.

## Claims

1. A method for implementing on a computer a user interface for allowing a user to formulate a complex database query which comprises a plurality of individual query statement portions respectively linked by a linking statement, said method comprising:
displaying a first graphical user interface for inputting by a user query design information corresponding to a first query statement portion;
displaying a second graphical user interface which displays a representation of said first query statement portion;
in response to a user request for inputting a further query statement portion, receiving a user input defining said linking statement which links said first and said further query statement portions;
displaying said first graphical user interface for receiving by a user query design information corresponding to said further query statement portion;
displaying in said second graphical user interface a hierarchical tree view of said query portions inputted into said first graphical user interface.

2. The method of claim 1, further comprising:
in response to a user input selecting a query portion from said query portions displayed in said second graphical user interface, bringing said first graphical user interface into conformity with said query portion selected, such that said first graphical user interface displays query design information corresponding to said selected query portion and enables a user to amend said query design information; and
in response to a query execution request issued by a user, executing only the query portion which has been selected in said second graphical user interface.

3. The method of one of claims 1 or 2, wherein one or more of the following is implemented:
said tree view also comprises said linking statement;
said query statement is an SQL query statement.

4. The method of claim 1, 2 or 3, wherein said first graphical user interface is a query by example window.

5. The method of one of the preceeding claims, wherein said representation of said first query statement portion is in the form of an SQL statement, and wherein said method further comprises:
if said linking statement is a UNION statement, displaying said further query statement portion as a sibling node in said tree view, the hierarchy level of which is the same as for the query statement portion which has previously been generated; and
if said linking statement is a conditional statement, displaying said further query statement portion as a child node in said tree view, the hierarchy level of which is lower than for the query statement portion which has previously been generated.

6. The method of one of the preceeding claims, further comprising:
displaying in said tree view of said second graphical user interface a root node which corresponds to said complex database query as a whole;
if said root node is selected by a user, enabling said user to execute said complex database query as a whole.

7. The method of one of the preceeding claims, further comprising:
displaying in said tree view an indication for each node as to whether this node has any child nodes, and if so, in response to a corresponding user request incorporating said child node representation into said parent node to thereby reduce the number of branches displayed in said tree view; and
in response to a corresponding user request expanding said parent node representation such that said child node again is displayed as a separate node in said tree view.

8. A software tool for implementing on a computer a user interface for allowing a user to formulate a complex database query which comprises a plurality of individual query statement portions respectively linked by a linking statement, said software tool comprising:
a software code portion for displaying a first graphical user interface for inputting by a user query design information corresponding to a first query statement portion;
a software code portion for displaying a second graphical user interface which displays a representation of said first query statement portion;
a software code portion for responding to a user request for inputting a further query statement portion by receiving a user input defining said linking statement which links said first and said further query statement portions;
a software code portion for displaying said first graphical user interface for receiving by a user query design information corresponding to said further query statement portion;
a software code portion for displaying in said second graphical user interface a hierarchical tree view of said query portions inputted into said first graphical user interface.

9. The software tool of claim 8, further comprising:
a software code portion for in response to a user input selecting a query portion from said query portions displayed in said second graphical user interface, bringing said first graphical user interface into conformity with said query portion selected, such that said first graphical user interface displays query design information corresponding to said selected query portion and enables a user to amend said query design information; and for
in response to a query execution request issued by a user, executing only the query portion which has been selected in said second graphical user interface.

10. The software tool of claim 8 or 9, wherein said first graphical user interface is a query by example window.

11. The software tool of one of claims 8 to 10, wherein said representation of said first query statement portion is in the form of an SQL statement, and wherein said software tool further comprises:
a software code portion for, if said linking statement is a UNION statement, displaying said further query statement portion as a sibling node in said tree view, the hierarchy level of which is the same as for the query statement portion which has previously been generated; and
a software code portion for, if said linking statement is a conditional statement, displaying said further query statement portion as a child node in said tree view, the hierarchy level of which is lower than for the query statement portion which has previously been generated.

12. The software tool of one of claims 8 to 11, further comprising:
a software code portion for displaying in said tree view of said second graphical user interface a root node which corresponds to said complex database query as a whole;
a software code portion for if said root node is selected by a user, enabling said user to execute said complex database query as a whole.

13. The software tool of one of claims 8 to 12, further comprising:
a software code portion for displaying in said tree view an indication for each node as to whether this node has any child nodes, and if so, in response to a corresponding user request incorporating said child node representation into said parent node to thereby reduce the number of branches displayed in said tree view; and
a software code portion for in response to a corresponding user request expanding said parent node representation such that said child node again is displayed as a separate node in said tree view.

14. A computer program product comprising computer program code which when executed on a computer enables said computer to carry out a method comprising:
displaying a first graphical user interface for receiving from a user database query design information corresponding to a first query statement portion;
displaying a second graphical user interface which displays a representation of said first query statement portion;
in response to a user request for inputting a further query statement portion, receiving a user input defining said linking statement which links said first and said further query statement portions;
displaying said first graphical user interface for receiving by a user query design information corresponding to said further query statement portion;
displaying in said second graphical user interface a hierarchical tree view of said query portions inputted into said first graphical user interface.

15. A computer program comprising computer program code which when executed on a computer enables said computer to carry out a method according to one of claims 1 to 7.

16. A computer system comprising:
a processing unit, a storage unit, a display unit, and an input unit;
said processing unit controlling in response to instructions stored in said storage unit said display unit for displaying a first graphical user interface for inputting by a user query design information corresponding to a first query statement portion;
said processing unit further controlling in response to instructions stored in said storage unit said display unit for displaying a second graphical user interface which displays a representation of said first query statement portion;
said processing unit further controlling in response to instructions stored in said storage unit said input unit for in response to a user request for inputting a further query statement portion, receiving a user input defining said linking statement which links said first and said further query statement portions;
said processing unit further controlling in response to instructions stored in said storage unit said displaying unit for displaying said first graphical user interface for receiving by a user query design information corresponding to said further query statement portion; and further controlling
said displaying unit for displaying in said second graphical user interface a hierarchical tree view of said query portions inputted into said first graphical user interface.
